# EUROPEAN PATENT SPECIFICATION

(11) **EP 2 221 766 B1**
(45) Date of publication and mention of the grant of the patent: **12.12.2012**
(21) Application number: 09011607.0
(22) Date of filing: 10.09.2009
(51) Int. Cl.: G06T 7/00, A61N 5/10

(54) **Control apparatus of radiotherapy apparatus and position determining method**
Steuerungsvorrichtung für Röntgengerät und Positionsbestimmungsverfahren
Appareil de contrôle pour appareil de radiothérapie et procédé pour déterminer la position

(30) Priority: 24.02.2009 JP 2009041241
(43) Date of publication of application: 25.08.2010
(73) Proprietor: Mitsubishi Heavy Industries, Ltd., Tokyo 108-8215 (JP)
(72) Inventor: Yamada, Masahiro, Hiroshima-shi Hiroshima (JP); Takahashi, Kunio, Hiroshima-shi Hiroshima (JP); Kaneko, Shuji, Hiroshima-shi Hiroshima (JP)
(74) Representative: HOFFMANN EITLE

(56) References cited:
- EP-A1- 1 832 312
- WO-A1-00/08600
- US-A1- 2001 048 757
- US-A1- 2007 297 566
- MICHALSKI J M ET AL: "An evaluation of two methods of anatomical alignment of radiotherapy portal images" INTERNATIONAL JOURNAL OF RADIATION: ONCOLOGY BIOLOGY PHYSICS, PERGAMON PRESS, USA, vol. 27, no. 5, 1 December 1993 (1993-12-01), pages 1199-1206, XP026847831 ISSN: 0360-3016 [retrieved on 1993-12-01]

## Description

### Technical Field

The present invention relates to a radiotherapy system of a control apparatus and a radiotherapy apparatus, and a position determining method, and is more particularly relates to a radiotherapy system of a control apparatus and a radiotherapy apparatus and a position measuring method used by the radiotherapy system.

### Background Art

Radiotherapy for treating a patient is known, in which a therapeutic radiation to an affected region (tumor) is irradiated, including a particle-beam radiotherapy. In the radiotherapy, it is desired that a therapeutic effect is high, and in the therapeutic radiation, a radiation dose irradiated to normal cells is desired to be small, compared to a radiation dose irradiated to the affected cells. For this purpose, the therapeutic radiation has to be accurately irradiated to the affected region. A radiotherapy apparatus for carrying out the radiotherapy includes an imager system for picking up or imaging a transmission image of a patient, a therapeutic radiation irradiating unit for emitting the therapeutic radiation, and a drive unit for driving the therapeutic radiation irradiating unit. The radiotherapy apparatus calculates position data of the affected region on the basis of the transmission images, and drives the therapeutic radiation irradiating unit by a driving unit so that the therapeutic radiation can be irradiated based on the calculated position data. Such a radiotherapy apparatus can make an irradiation field of the therapeutic radiation narrower even when the affected region moves in accordance with movement of the patient, and can more reduce a radiation exposure to the normal cells, compared to a radiation exposure to the affected region. Thus, the radiotherapy apparatus is desired to more facilitate an input operation of data necessary to calculate the position data of the affected region from the transmission images.

Japanese Patent No. 4,126,318 discloses a radiotherapy apparatus control method for detecting a predetermined portion of a specimen under test more accurately. In the radiotherapy apparatus control method, a plurality of projection templates are produced by projecting a plurality of images on a one plane to show the specimen on different positions. A characteristic portion template is produced to show a portion common to the plurality of projection templates. A position data of an objective portion is calculated by performing pattern matching of the characteristic portion template and a change of projection brightness.

### Disclosure of Invention

An object of the present invention is to provide a radiotherapy system of a control apparatus and a radiotherapy apparatus, and a position determining method, in which an input operation of necessary data can be facilitated.

Another object of the present invention is to provide a radiotherapy system of a control apparatus and a radiotherapy apparatus, and a position determining method, in which a plurality of image templates used to calculate position data of a concerned portion of a subject can be produced with a small amount operation by a user.

In an aspect of the present invention, a control apparatus for a radiotherapy apparatus, includes: a storage unit configured to store a plurality of transmission images obtained by a first imaging control section using radiation which has transmitted through a subject; a region designating section configured to designate an objective portion region on a first selection transmission image among the plurality of transmission images based on data supplied from an input unit; a separating section configured to calculate a plurality of separation results based on the first selection transmission image, the objective portion region and a second selection transmission image of the plurality of transmission images; a reconfiguring section configured to calculate a plurality of reconfiguration images based on the plurality of separation results; a template producing section configured to produce a plurality of template images based on an optimum separation result selected from the plurality of separation results based on the plurality of reconfiguration images; a second imaging section configured to image a position calculation transmission image by using the radiation which has transmitted through the subject; a position calculating section configured to calculate position data of the objective portion region based on the plurality of template images and the position calculation transmission image; a swing control section configured to control a swing mechanism to move a radiation irradiating unit in relation to the subject based on the position data such that radiation transmits through the objective portion region; and an irradiation control section configured to control the radiation irradiating unit to irradiate the radiation. Each of the plurality of separation results indicates an objective portion template and a background template, and is calculated such that a first difference between the first selection transmission image and an image produced by superimposing the objective portion template on the objective portion region of the background template becomes small and a second difference between the second selection transmission image and an image produced by superimposing the objective portion template on an assumption region, which is different from the objective portion region, of the background template becomes small.

In another aspect of the present invention, a position determining method is achieved by obtaining a plurality of transmission images by using radiation transmitting through a subject; by designating an objective portion region of a first selection transmission image among the plurality of transmission images based on data supplied through an operation of an input unit; by calculating a plurality of separation results based on the first selection transmission image, the objective portion region, and a second selection transmission image of the plurality of transmission images; by calculating a plurality of reconfiguration images based on the plurality of separation results; by producing a plurality of template images from the plurality of reconfiguration images based on an optimum separation result of the plurality of separation results; by obtaining a position calculation transmission image by using radiation transmitting through the subject; and by calculating position data of the objective portion region based on the plurality of template images and the position calculation transmission image. Each of the plurality of separation results shows an objective portion template and a background template. Said each separation result is determined such that a first difference becomes small between the first selection transmission image and an image obtained by superimposing the objective portion template on the objective portion region in the background template, and a second difference becomes small between the second selection transmission image and an image obtained by superimposing the objective portion template on an assumption region other than the objective portion region in the background template.

A radiotherapy system of a control apparatus and a radiotherapy apparatus, and a position determining method according to the present invention can reduce an amount of user operation when the plurality of template images used to calculate a position of the concerned portion of a subject.

### Brief Description of Drawings

FIG. 1 is a block diagram showing a radiotherapy system;
FIG. 2 is a perspective view showing a radiotherapy apparatus used in the present invention;
FIG. 3 is a block diagram showing a control apparatus of a radiotherapy apparatus;
FIGS. 4A and 4B are diagrams showing a plurality of transmission images;
FIGS. 5A to 5C are diagrams showing a plurality of assumption regions;
FIGS. 6A to 6C are diagrams showing a plurality of separation results; and
FIGS. 7A to 7C are diagrams showing a plurality of re-configured images.

### Description of Embodiments

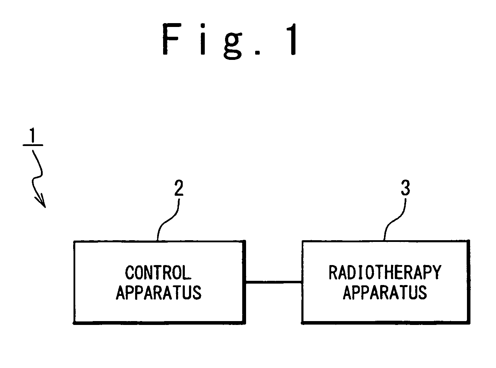

Hereinafter, a radiotherapy system 1 of a control apparatus 2 and a radiotherapy apparatus 3 according to the present invention will be described with reference to the drawings. As shown in FIG. 1, the control apparatus 2 is exemplified by a computer such as a personal computer or a work station. The control apparatus 2 and the radiotherapy apparatus 3 are connected with each other so as to be bidirectionally communicable.

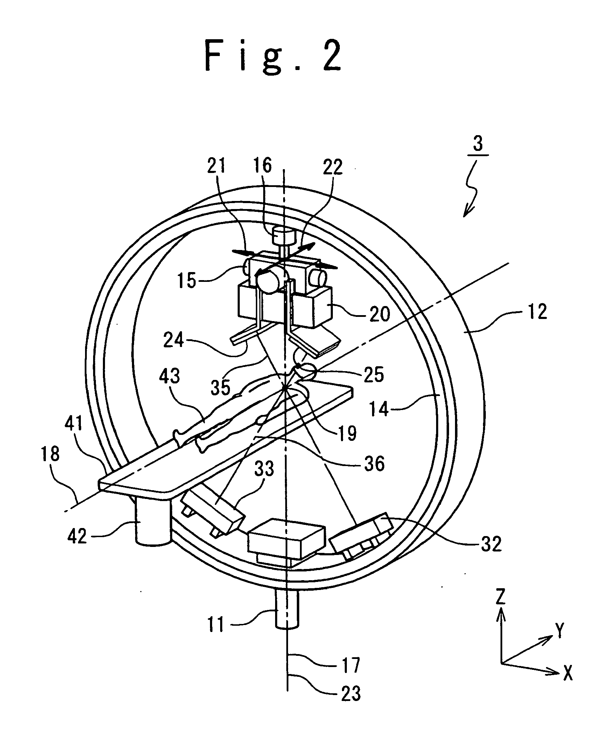

FIG. 2 schematically shows the radiotherapy apparatus 3. The radiotherapy apparatus 3 includes a rotation driving unit 11, an O-ring 12, a traveling gantry 14, a swing mechanism 15, and a therapeutic radiation irradiating unit 16. The rotation driving unit 11 supports the O-ring 12 on a base to rotate the O-ring 12 around a rotational axis 17 under control of the control apparatus 2. The rotational axis 17 is parallel to a vertical direction. The rotation driving unit 11 further measures a rotational angle of the O-ring 12 with respect to the base. The O-ring 12 is formed to have a ring shape including the rotational axis 18 in the center, and supports the traveling gantry 14 to be rotatable around the rotational axis 18. The rotational axis 18 is orthogonal to the vertical direction, and passes through an isocenter 19 on the rotational axis 17. The rotational axis 18 is further fixed to the O-ring 12, namely, rotates around the rotational axis 17 with the O-ring 12. The traveling gantry 14 is formed to have a ring shape including the rotational axis 18 in the center, and is arranged to be concentric with the O-ring 12. The radiotherapy apparatus 3 further includes a travel driving unit that is not shown in the drawings. The travel driving unit rotates the traveling gantry 14 around the rotational axis 18 under the control of the control apparatus 2. The travel driving unit further measures a traveling angle of the traveling gantry 14 with respect to the O-ring 12.

The therapeutic radiation irradiating unit 16 is arranged to the inside of the traveling gantry 14, and the swing mechanism 15 supports the therapeutic radiation irradiating unit 16 on the traveling gantry 14. The swing mechanism 15 has a tilt axis 21 and a pan axis 22. The pan axis 22 is fixed to the traveling gantry 14, and is parallel to the rotational axis 18 without intersecting with the rotational axis 18. The tilt axis 21 is orthogonal to the pan axis 22. The swing mechanism 15 rotates the therapeutic radiation irradiating unit 16 around the pan axis 22 and rotates the therapeutic radiation irradiating unit 16 around the tilt axis 21 under the control of the control apparatus 2.

The therapeutic radiation irradiating unit 16 irradiates therapeutic radiation 23 under the control of the control apparatus 2. The therapeutic radiation 23 is irradiated in almost parallel to a straight line passing through an intersection point where the pan axis 22 intersects with the tilt axis 21. The therapeutic radiation 23 is formed to have a uniform intensity distribution. The therapeutic radiation irradiating unit 16 has a multi-leaf collimator (MLC) 20. The multi-leaf collimator 20 partially shields the therapeutic radiation 23 to change the shape of irradiation field when the therapeutic radiation 23 is irradiated to a patient under the control of the control apparatus 2.

When the therapeutic radiation irradiating unit 16 is supported by the traveling gantry 14 in this manner and the therapeutic radiation irradiating unit 16 is once adjusted to face the isocenter 19 by the swing mechanism 15, the therapeutic radiation 23 almost constantly passes through the isocenter 19 even when the O-ring 12 is rotated by the rotation driving unit 11 or the traveling gantry 14 is rotated by the travel driving unit. That is, the irradiation of the therapeutic radiation 23 from an arbitrary direction to the isocenter 19 can be attained through the traveling and rotation.

The radiotherapy apparatus 3 further includes a plurality of imager systems. That is, the radiotherapy apparatus 3 includes diagnostic X-ray sources 24 and 25 and sensor arrays 32 and 33. The diagnostic X-ray source 24 is arranged and supported on the inside of the ring of the traveling gantry 14, such that an angle between a line segment connecting the isocenter 19 to the diagnostic X-ray source 24 and a line segment connecting the isocenter 19 to the therapeutic radiation irradiating unit 16 is an acute angle. The diagnosis X-ray source 24 emits a diagnosis X-ray 35 to the isocenter 19 under the control of the control apparatus 2. The diagnosis X-ray 35 is emitted from one point included the diagnosis X-ray source 24, to have a conical shape including the one point as an apex. The diagnostic X-ray source 25 is arranged and supported on the inside of the ring of the traveling gantry 14, such that an angle between a line segment connecting the isocenter 19 to the diagnostic X-ray source 25 and a line segment connecting the isocenter 19 to the therapeutic radiation irradiating unit 16 is an acute angle. The diagnosis X-ray source 25 emits a diagnosis X-ray 36 to the isocenter 19 under the control of the control apparatus 2. The diagnosis X-ray 36 is emitted from one point including the diagnosis X-ray source 25, to have a conical shape including the one point as the apex.

The sensor array 32 is supported on the traveling gantry 14. The sensor array 32 receives the diagnosis X-ray 35 that is emitted from the diagnosis X-ray source 24 and transmits through a subject around the isocenter 19, and generates a transmission image of the subject. The sensor array 33 is supported on the traveling gantry 14. The sensor array 33 receives the diagnosis X-ray 36 that is emitted from the diagnosis X-ray source 25 and transmits through the subject around the isocenter 19, and generates a transmission image of the subject. An FPD (Flat Panel Detector) and an X-ray II (image Intensifier) are exemplified as the sensor arrays 32 and 33.

According to such an imager system, a transmission image around the isocenter 19 can be generated on the basis of image signals obtained by the sensor arrays 32 and 33.

The radiotherapy apparatus 3 further includes a couch 41 and a couch driving unit 42. The couch 41 is used by a patient 43 to lie on it, who will be treated by the radiotherapy system 1. The couch 41 includes a fixture that is not shown in the drawings. The fixture is used to fix the patient on the couch 41 so that the patient cannot move on it. The couch driving device 42 supports the couch 41 on the base, and moves the couch 41 under the control of the control apparatus 2.

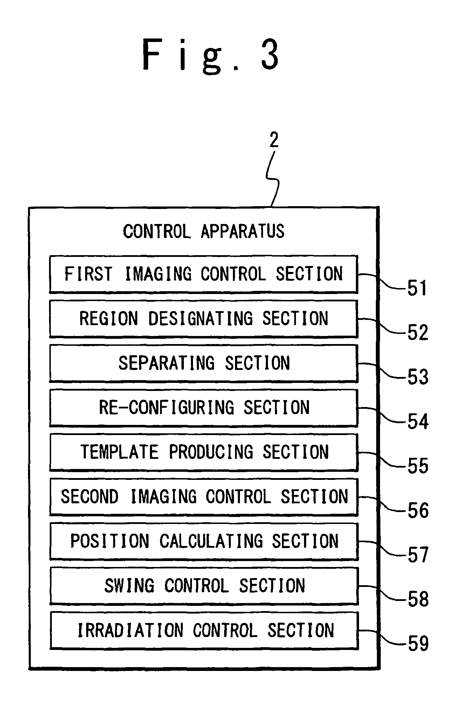

FIG. 3 shows a configuration of the control apparatus 2. The control apparatus 2 includes a CPU, a storage unit, an input unit, and an interface (all being not shown). The CPU executes computer programs installed from a recording medium (not shown) into the control apparatus 2 to control the storage unit, the input unit, and the interface. The storage unit stores the computer programs, and temporarily stores data generated by the CPU. The input unit generates data through a user operation and outputs the data to the CPU. A keyboard is exemplified as the input unit. The interface outputs to the CPU, data generated by an external unit connected to the control apparatus 2, and outputs the data generated by the CPU to the external unit. The external unit includes the rotation driving unit 11 the travel driving unit, the swing mechanism 15, the therapeutic radiation irradiating unit 16, the multi-leaf collimator 20, the imager systems (the diagnostic X-ray sources 24 and 25 and the sensor arrays 32 and 33), and the couch driving unit 42 of the radiotherapy apparatus 3.

The computer program includes a first imaging control section 51, a region designating section 52, a separating section 53, a reconfiguring section 54, a template producing section 55, a second imaging control section 56, a position calculating section 57, a swing control section 58, and an irradiation control section 59.

The first imaging control section 51 fixes the O-ring 12 at a rotational angle shown in a therapeutic plan by controlling the rotation driving unit 11 of the radiotherapy apparatus 3, and fixes the traveling gantry 14 at a traveling angle shown in the therapeutic plan by controlling the traveling driving unit of the radiotherapy apparatus 3. The first imaging control section 51 performs imaging of a plurality of transmission images at a plurality of imaging times different from each other, by controlling the imager systems of the radiotherapy apparatus 3 in the state that the traveling gantry 14 is fixed. That is, the first imaging control section 51 performs the imaging of a plurality of first transmission images at the imaging times, respectively, by controlling the diagnostic X-ray source 24 and the sensor arrays 32 in the state that the traveling gantry 14 is fixed. The first imaging control section 51 performs the imaging of a plurality of second transmission images at the imaging times, respectively, by controlling the diagnostic X-ray source 25 and the sensor arrays 33 in the state that the traveling gantry 14 is fixed. Thus, the plurality of transmission images represent a subject arranged around the isocenter 19, respectively, and are stored in the storage unit.

The region designating section 52 selects one of the plurality of first transmission images obtained by the first imaging control section 51 as a first selection transmission image on the basis of data supplied through an operation of the input unit of the control apparatus 2, and displays the selected transmission image on the display unit of the control apparatus 2. The region designating section 52 designates an objective portion region on the basis of the data supplied from the input unit of the control apparatus 2. The objective portion region is an affected region of the patient 43 represented on the selected transmission image.

The separating section 53 selects another of the plurality of transmission images obtained by the first imaging control section 51 as a second selection transmission image on the basis of data supplied through an operation of the input unit of the control apparatus 2. The separating section 53 further calculates a plurality of separation results on the basis of the first selection transmission image, the second selection transmission image, and the objective portion region. The plurality of separation results represent a plurality of assumption regions that can be designated from the transmission images selected by the user.

The reconfiguring section 54 calculates a plurality of reconfiguration images on the basis of the plurality of separation results calculated by the separating section 53, respectively.

The template producing section 55 selects one of the plurality of reconfiguration images calculated by the reconfiguring section 54 on the basis of the first selection transmission image. The selected reconfiguration image is the most similar to the first selection transmission image among the plurality of reconfiguration images calculated by the reconfiguring section 54. The template producing section 55 further calculates a separation result used for the calculation of the selected reconfiguration image from the plurality of separation results calculated by the separating section 53. The template producing section 55 further produces a plurality of templates on the basis of the calculated separation result. When the plurality of templates are superimposed, almost the same as the first or second selection transmission image can be obtained

The second imaging control section 56 images two position calculation transmission images by using the imager systems of the radiotherapy apparatus 3 in the state that the traveling gantry 14 is fixed, in the same manner when the plurality of transmission images are obtained by the first imaging control section 51. The two position calculation transmission images include the first position calculation transmission image and the second position calculation transmission image. The first position calculation transmission image is obtained by using the diagnostic X-ray source 24 and the sensor array 32. The second position calculation transmission image is obtained by using the diagnostic X-ray source 25 and the sensor array 33 at the time when the first position calculation transmission image is imaged.

The position calculating section 57 calculates position data of the affected region of the patient 43 from the plurality of template images produced by the template producing section 55 and the two position calculation transmission images obtained by the second imaging control section 56.

The swing control section 58 controls the swing mechanism 15 to drive the therapeutic radiation irradiating unit 16 so that the therapeutic radiation 23 can transmit through the affected region based on the position data calculated by the position calculating section 57. The irradiation control section 59 calculates a shape of irradiation field on the basis of the transmission images obtained by the first imaging control section 51, and controls the multi-leaf collimator 20 to form the irradiation field of the therapeutic radiation 23 of the calculated shape. The irradiation control section 59 further controls the therapeutic radiation irradiating unit 16 to irradiate the therapeutic radiation 23 to the patient.

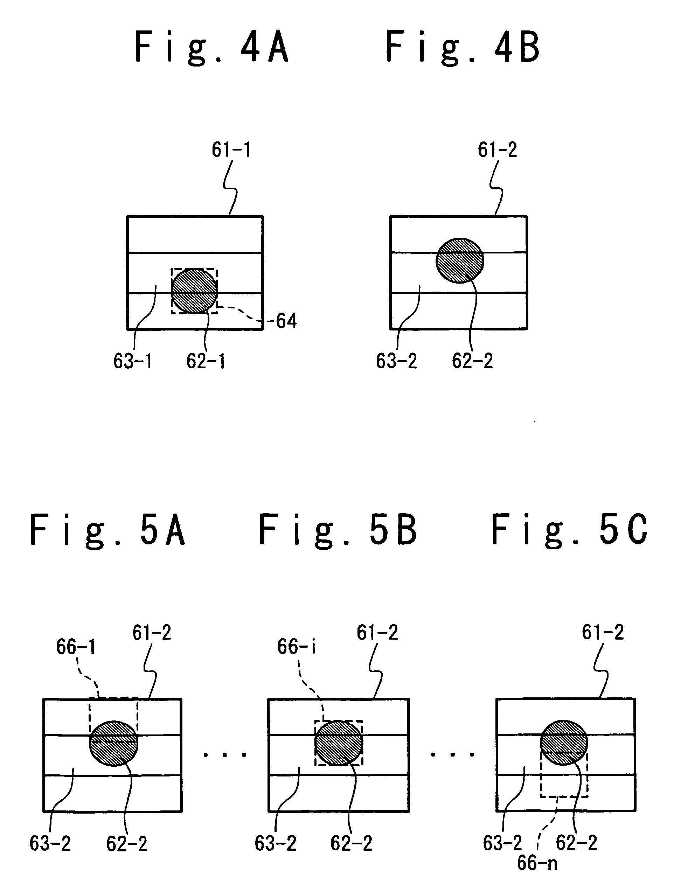

FIGS. 4A and 4B show two of the plurality of transmission images obtained by the first imaging control section 51. The two transmission images 61-1 and 61-2 are obtained by using the diagnostic X-ray source 24 and the sensor array 32 at imaging times different from each other, respectively. The transmission image 61-1 represents an image 62-1 of the affected region and a background image 63-1. The affected region image 62-1 shows the affected region of the patient 43. The background image 63-1 shows organs other than the affected region of the patient 43, or the couch 41. The transmission image 61-2 represents an image 62-2 of the affected region and a background image 63-2. The affected region image 62-2 shows the affected region of the patient 43. The background image 63-2 shows organs other than the affected region of the patient 43 or the couch 41. The two transmission images 61-1 and 61-2 are selected from the plurality of transmission images obtained by the first imaging control section 51 so that a relative position of the affected region image 62-1 to the background image 63-1 is significantly different from a relative position of the affected region image 62-2 to the background image 63-2.

When the transmission image 61-1 is selected on the basis of data supplied through an operation of the input unit of the control apparatus 2, the region designating section 52 displays the transmission image 61-1 on the display unit of the control apparatus 2. In this case, the region designating section 52 further designates an objective portion region 64 on the basis of data supplied through the operation of the input unit of the control apparatus 2. The objective portion region 64 shows the affected region image 62-1 represented on the transmission image 61-1, and a shape and a position of the region can be detected.

FIGS. 5A to 5C show a plurality of assumption regions that are assumed by the separating section 53. Each assumption region 66-i (i = 1, 2, 3, ··· , n) of the plurality of assumption regions 66-1 to 66-n (n = 2, 3, 4, ···) is shown on the transmission image 61-2 and has the same shape as that of the objective portion region 64. The assumption region 66-i is arranged on possible positions different from each other on the transmission image 61-2, to cover the entire transmission image 61-2. Either one of the plurality of assumption regions 66-1 to 66-n includes the affected region image 62-2. At this time, a positional relationship between the one assumption region and the affected region image 62-2 is the same as a positional relationship between the objective portion region 64 and the affected region image 62-1.

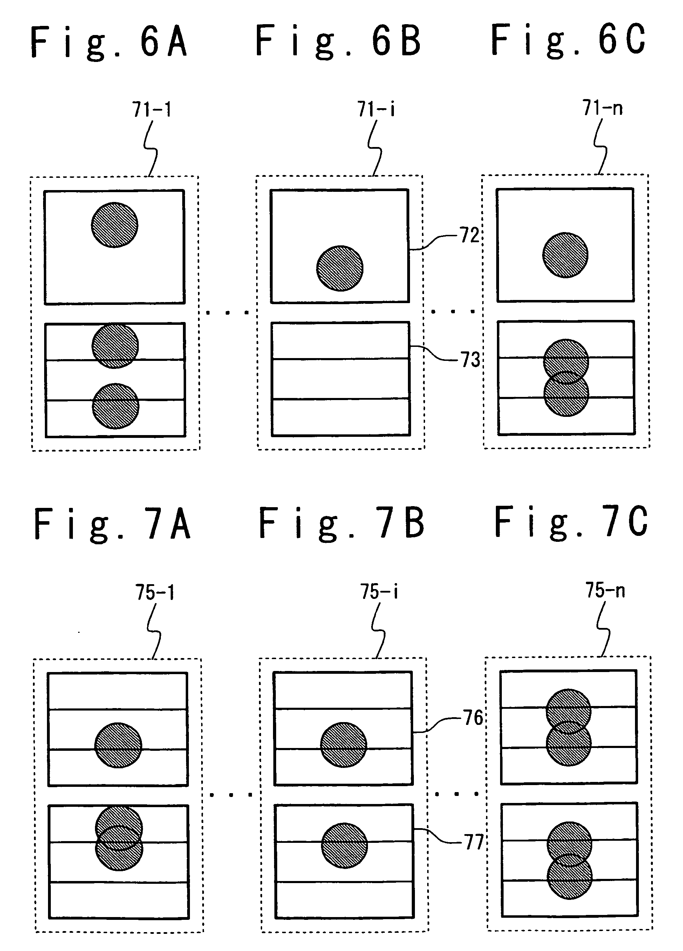

FIGS. 6A to 6C show a plurality of separation results 71-1 to 71-n calculated by the separating section 53. Each of the plurality of separation results 71-1 to 71-n contains an objective portion template 72 and a background template 73. At this time, the separating section 53 calculates the plurality of separation results 71-1 to 71-n on the basis of the two transmission images 61-1 and 61-2, the objective portion region 64, and the plurality of assumption regions 66-1 to 66-n. That is, the separating section 53 calculates the separation result 71-i on the basis of the two transmission images 61-1 and 61-2, the objective portion region 64, and the assumption region 66-i. In this case, the objective portion template 72 is produced based on the affected region image in the corresponding assumption region 66-i. The separation result 71-i is calculated as follows by using the least-square method. A first difference is calculated between an image produced by superimposing the objective portion template 72 in the position of the objective portion region 64 on the background template 73 and the transmission image 61-1. Also, a second difference is calculated between an image produced by superimposing the objective portion template 72 in the position of the assumption region 66-i on the background template 73 and the transmission image 61-2. Then, the separation result 71-i is calculated such that the first difference is small and the second difference is small.

An example of the method for calculating the separation result 71-i on the basis of the two transmission images 61-1 and 61-2, the objective portion region 64, and the assumption region 66-i will be described below. The transmission images 61-1 and 61-2, the objective portion template 72, and the background template 73 have the same size and are formed from a plurality of pixels. Each of the plurality of pixels represents a brightness. The brightness corresponds to a transmittance when the diagnostic X-rays 35 and 36 transmit through the subject. In the present example, the plurality of pixels of the transmission image 61-1 are supposed to be arranged in a matrix of 4 columns by 4 rows, and are identified on the basis of a combination of a column number and a row number. The plurality of pixels of the transmission image 61-2 are supposed to be arranged in the matrix of 4 columns by 4 rows, and are identified on the basis of the combination of the column number and the row number. The plurality of pixels of the objective portion template 72 are supposed to be arranged in a matrix of 2 columns by 2 rows, and are identified on the basis of the combination of the column number and the row number. The plurality of pixels of the background template 73 are supposed to be arranged in a matrix of 2 columns by 2 rows, and are identified on the basis of the combination of the column number and the row number.

In such an example, a plurality of known numbers all to a₄₄ and b₁₁ to b₄₄ and a plurality of unknown numbers c₁₁ to c₂₂ and d₁₁ to d₄₄ are used. The known number a_{xy} shows a brightness of a pixel arranged on the position of the x^{th} column and y^{th} row in the transmission image 61-1. The known number b_{xy} shows a brightness of a pixel arranged on the position of the x^{th} column and y^{th} row of the transmission image 61-2. The unknown number c_{xy} shows a brightness of a pixel arranged on the position of the x^{th} column and y^{th} row of the objective portion template 72. The unknown number d_{xy} shows a brightness of a pixel arranged on the position of the x^{th} column and y^{th} row of the background template 73.

In the present example, the objective portion region 64 is further formed from a pixel arranged in the 2nd column and 2nd row; a pixel arranged in the 3rd column and 2nd row; a pixel arranged in the 2nd column and 3rd row; and a pixel arranged in the 3rd column and 3rd row. The assumption region 66-i is formed from a pixel arranged in the 3rd column and 3rd row; a pixel arranged in the 4th column and 3rd row; a pixel arranged in the 3rd column and 4th row; and a pixel arranged in the 4th column and 4th row.

In this case, a plurality of unknown numbers C₁₁ to c₂₂ and d₁₁ and d₄₄ are calculated by solving the following equations by using the least-square method,
d₁₁ = a₁₁
d₁₂ = a₁₂
d₁₃ = a₁₃
d₁₄ = a₁₄
d₂₁ = a₂₁
d₂₂ + c₁₁ = a₂₂
d₂₃ + C₁₂ = a₂₃
d₂₄ = a₂₄
d₃₁ = a₃₁
d₃₂ + C₂₁ = a₃₂
d₃₃ + C₂₂ = a₃₃
d₃₄ = a₃₄
d₄₁ = a₄₁
d₄₂ = a₄₂
d₄₃ = a₄₃
d₄₄ = a₄₄
d₁₁ = b₁₁
d1₂ = b₁₂
d₁₃ = b₁₃
d₁₄ = b₁₄
d₂₁ = b₂₁
d₂₂ = b₂₂
d₂₃ = b₂₃
d₂₄ = b₂₄
d₃₁ = b₃₁
d₃₂ = b₃₂
d₃₃ + c₁₁ = b₃₃
d₃₄ + c₁₂ = b₃₄
d₄₁ = b₄₁
d₄₂ = b₄₂
d₄₃ + c₂₁ = b₄₃
d₄₄ + c₂₂ = b₄₄.
   It should be noted that the plurality of unknown numbers c₁₁ to c₂₂ and d₁₁ to d₄₄ may be calculated by using another algorithm different from the least-square method.

FIGS. 7A to 7C show a plurality of reconfiguration images calculated by the reconfiguring section 54. Each of the plurality of reconfiguration images can be grouped into a plurality of reconfiguration image groups 75-1 to 75-n. Each of the plurality of reconfiguration image groups 75-1 to 75-n includes a first reconfiguration image 76 and a second reconfiguration image 77. Under this condition, the reconfiguring section 54 calculates the plurality of reconfiguration image groups 75-1 to 75-n on the basis of the objective portion region 64, the plurality of assumption regions 66-1 to 66-n, and the plurality of separation results 71-1 to 71-n. That is, the reconfiguring section 54 calculates the reconfiguration image group 75-i on the basis of the objective portion region 64, the assumption region 66-i, and the separation result 71-i.

The first reconfiguration image 76 of the reconfiguration image group 75-i is reconfigured by superimposing the objective portion template 72 in the position of the objective portion region 64 on the background template 73 of the separation result 71-i. The second reconfiguration image 77 of the reconfiguration image group 75-i is reconfigured by superimposing the objective portion template 72 in the position of the assumption region 66-i on the background template 73 of the separation result 71-i. In this case, the template producing section 55 calculates the most optimum reconfiguration image group 75-i from among the plurality of reconfiguration image groups 75-1 to 75-n on the basis of two transmission images 61-1 to 61-2. The most optimum reconfiguration image group 75-i has a minimum summation of a difference between the first reconfiguration image 76 and the transmission image 61-1, and a difference between the second reconfiguration image 77 and the transmission image 61-2. Then, the template producing section 55 calculates the most optimum separation result 71-i from among the plurality of separation results 71-1 to 71-n on the basis of the most optimum reconfiguration image group 75-i. The most optimum separation result 71-i is used for calculating the most optimum reconfiguration image group 75-i among the plurality of separation results 71-1 to 71-n.

The algorithm for determining the separation results and the algorithm for determining the reconfiguration image group are irreversible. The separation result 71-i is calculated on the basis of one assumption region 66-i showing a region representing the affected region image 62-2 among the plurality of assumption regions 66-1 to 66-n. Accordingly, the objective portion template 72 of the separation result 71-i calculated in such a manner can be regarded as an image only representing the affected region of the patient 43, and the background template 73 of the separation result 71-i calculated in such manner can be regarded as an image only representing an object other than the affected region.

The template producing section 55 further produces the plurality of first template images by using the optimum separation result 71-i. The plurality of first template images are calculated by superimposing the objective portion template 72 of the optimum separation result 71-i on positions of the plurality of assumption regions 66-1 to 66-n in the background template 73 of the optimum separation result 71-i.

The plurality of template images calculated in such a manner generally coincides with the plurality of transmission images where respective positions between the affected region of the patient 43 and the object other than the affected region are different from each other. That is, the region designating section 52, the separating section 53, the reconfiguring section 54, and the template producing section 55 collaborate in the production of the plurality of first template images from the plurality of first transmission images obtained by the first imaging control section 51. The region designating section 52, the separating section 53, the reconfiguring section 54, and the template producing section 55 further produce a plurality of second template images from the plurality of second transmission images obtained by the first imaging control section 51 in the same manner as the production of the plurality of first template images from the plurality of first transmission images.

At this time, the position calculating section 57 calculates a plurality of coincidence degrees of the plurality of first template images produced by the template producing section 55 on the basis of the first position calculation transmission image obtained by the second imaging control section 56. The coincidence degree shows a degree of similarity of a corresponding one of the plurality of first template images to the first position calculation transmission image, and shows that as the value becomes larger, the image of the region becomes more similar to the template image. The position calculating section 57 calculates the first template image having a maximum coincidence degree from among the plurality of first template images. The position calculating section 57 calculates first position data representing the affected region in the first position calculation transmission image by using the calculated first template image and the first position calculation transmission image. The position calculating section 57 calculates a plurality of coincidence degrees of the plurality of second template images produced by the template producing section 55 on the basis of the second position calculation transmission image obtained by the second imaging control section 56. The coincidence degree shows a degree of similarity of a corresponding one of the plurality of second template images to the second position calculation transmission image, and shows that as the value becomes larger, the image of the region becomes more similar to the template image. The position calculating section 57 calculates the second template image having a maximum coincidence degree from among the plurality of second template images. The position calculating section 57 calculates second position data representing the affected region in the second position calculation transmission image by using the calculated second template image and the second position calculation transmission image. The position calculating section 57 calculates a position data of the affected region of the patient 43 on the basis of the first position data and the second position data. Such calculation of the position data of the affected region is well known, and is disclosed in Japanese Patent No. 4,126,318.

The radiation irradiating method according to the embodiment of the present invention is carried out by the radiotherapy system 1, includes the position determining method according to the embodiment of the present invention, and includes an operation for producing a template; and an operation for the radiotherapy.

In the operation for producing the template, a user firstly fixes the patient 43 on the couch 41 of the radiotherapy apparatus 3 as shown in a therapeutic plan. The user further moves the couch 41 by operating the control apparatus 2 so that the affected region of the patient 43 can be positioned to approximately overlap the isocenter 19. As shown in the therapeutic plan, the control apparatus controls the rotation driving unit 11 of the radiotherapy apparatus 3 to additionally fix the O-ring 12 at a predetermined rotational angle, and the traveling driving unit of the radiotherapy apparatus 3 to fix the traveling gantry 14 around the rotational axis 18 at a predetermined traveling angle. The control apparatus 2 obtains a plurality of first transmission images of the patient 43 at imaging times different from each other by using the diagnosis X-ray source 24 and the sensor array 32 in the state that the traveling gantry 14 is fixed, and images a plurality of second transmission images of the patient 43 at the imaging times by using the diagnosis X-ray source 25 and the sensor array 33. The control apparatus 2 stores the obtained transmission images in the storage unit.

The control apparatus 2 firstly displays the plurality of first transmission images on the display unit. The user selects two transmission images 61-1 and 61-2 from among the plurality of first transmission images, and inputs data used for identifying the two transmission images 61-1 and 61-2 to the control apparatus 2 via the input unit. As the two transmission images 61-1 and 61-2, two images where their relative positions of the affected region of the patient 43 to an object other than the affected region are greatly different from each other are selected from among the plurality of first transmission images. The control apparatus 2 displays one of the selected two transmission images 61-1 and 61-2, the transmission image 61-1 in this example. The user selects the objective portion region 64 representing the affected region of the patient 43 among the transmission image 61-1, and inputs data showing a position and a shape of the objective portion region 64 to the control apparatus 2 via the input unit.

The control apparatus 2 calculates the plurality of separation results 71-1 to 71-n on the basis of the two transmission images 61-1 and 61-2, the objective portion region 64, and the plurality of assumption regions 66-1 to 66-n. That is, the control apparatus 2 calculates the separation result 71-i on the basis of the two transmission images 61-1 and 61-2, the objective portion region 64, and the assumption region 66-i. Subsequently, the control apparatus 2 calculates the plurality of reconfiguration image groups 75-1 to 75-n on the basis of the objective portion region 64, the plurality of assumption regions 66-1 to 66-n, and the plurality of separation results 71-1 to 71-n. That is, the control apparatus 2 calculates the reconfiguration image group 75-i on the basis of the objective portion region 64, the assumption region 66-i, and the separation result 71-i.

The control apparatus 2 calculates the most optimum reconfiguration image group 75-i from among the plurality of reconfiguration image groups 75-1 to 75-n on the basis of the two transmission images 61-1 to 61-2. The most optimum reconfiguration image group 75-i has a minimum summation of a difference between the first reconfiguration image 76 and the transmission image 61-1, and a difference between the second reconfiguration image 77 and the transmission image 61-2. Then, the template producing section 55 calculates the most optimum separation result 71-i from among the plurality of separation results 71-1 to 71-n on the basis of the most optimum reconfiguration image group 75-i. The most optimum separation result 71-i is used to calculate the most optimum reconfiguration image group 75-i among the plurality of separation results 71-1 to 71-n.

The control apparatus 2 further produces a plurality of first templates by using the optimum separation result 71-i. The plurality of first templates are calculated by superimposing the objective portion templates 72 of the optimum separation result 71-i on positions of the plurality of assumption regions 66-1 to 66-n in the background template 73 of the optimum separation result 71-i, respectively.

Next, the control apparatus 2 produces the plurality of second templates in the same manner as in the production of the plurality of first templates from the plurality of first transmission images. That is, the control apparatus 2 displays the plurality of second transmission images on the display unit. The user selects the two transmission images 61-1 and 61-2 from among the plurality of second transmission images, and inputs data used for identifying the two transmission images 61-1 and 61-2 to the control apparatus 2 via the input unit. As the two transmission images 61-1 and 61-2, two images where their relative positions of the affected region of the patient 43 to an object other than the affected region are widely different from each other are selected from among the plurality of second transmission images. The control apparatus 2 displays one of the selected two transmission images 61-1 and 61-2, the transmission image 61-1 in this example. The user selects the objective portion region 64 representing the affected region of the patient 43 among the transmission image 61-1, and inputs data showing a position and a shape of the objective portion region 64 to the control apparatus 2 via the input unit.

The control apparatus 2 calculates the plurality of separation results 71-1 to 71-n on the basis of the two transmission images 61-1 and 61-2, the objective portion region 64, and the plurality of assumption regions 66-1 to 66-n. That is, the control apparatus 2 calculates the separation result 71-i on the basis of the two transmission images 61-1 and 61-2, the objective portion region 64, and the assumption region 66-i. Subsequently, the control apparatus 2 calculates the plurality of reconfiguration image groups 75-1 to 75-n on the basis of the objective portion region 64, the plurality of assumption regions 66-1 to 66-n, and the plurality of separation results 71-1 to 71-n. That is, the control apparatus 2 calculates the reconfiguration image group 75-i on the basis of the objective portion region 64, the assumption region 66-I, and the separation result 71-i.

The control apparatus 2 calculates the most optimum reconfiguration image group 75-i from among the plurality of reconfiguration image groups 75-1 to 75-n on the basis of the two transmission images 61-1 to 61-2. The most optimum reconfiguration image group 75-i has the minimum summation of a difference between the first reconfiguration image 76 and the transmission image 61-1, and a difference between the second reconfiguration image 77 and the transmission image 61-2. Then, the template producing section 55 calculates the most optimum separation result 71-i from among the plurality of separation results 71-1 to 71-n on the basis of the most optimum reconfiguration image group 75-i. The most optimum separation result 71-i is used for calculating the most optimum reconfiguration image group 75-i among the plurality of separation results 71-1 to 71-n.

The control apparatus 2 further produces the plurality of second templates by using the optimum separation result 71-i. The plurality of second templates are calculated by superimposing the objective portion templates 72 of the optimum separation result 71-i on the positions of the plurality of assumption regions 66-1 to 66-n in the background template 73 of the optimum separation result 71-i, respectively.

The plurality of template images calculated in such a manner generally coincides with the plurality of transmission images where respective positions between the affected region of the patient 43 and the object other than the affected region are different from each other.

The operation for the radiotherapy is carried out immediately after an operation for producing a trace of the affected region has been carried out, and is carried out in the state where the patient 43 is fixed in the operation for producing the templates. The control apparatus 2 obtains the first position calculation transmission image of the patient 43 by using the diagnostic X-ray source 24 and the sensor arrays 32 in the state that the traveling gantry 14 is fixed, and obtains the second position calculation transmission image of the patient 43 by using the diagnostic X-ray source 25 and the sensor arrays 33.

The control apparatus 2 calculates a plurality of coincidence degrees of the plurality of first template images on the basis of the first position calculation transmission image. The control apparatus 2 calculates the first template image having the maximum coincidence degree from among the plurality of first template images. The control apparatus 2 calculates the first position data representing the affected region in the first position calculation transmission image by using the calculated first template image and the first position calculation transmission image. The control apparatus 2 calculates a plurality of coincidence degrees of the plurality of second template images on the basis of the second position calculation transmission image. The control apparatus 2 calculates the second template image having the maximum coincidence degree from among the plurality of second template images. The control apparatus 2 calculates the second position data representing the affected region in the second position calculation transmission image by using the calculated second template image and the second position calculation transmission image. The position calculating section 57 calculates the position of the affected region of the patient 43 on the basis of the calculated first position and second position.

The control apparatus 2 controls the swing mechanism 15 on the basis of the calculated affected region position data so that an irradiation axis of the therapeutic radiation 23 can be positioned on the affected region. The control apparatus 2 further calculates a shape of the irradiation field on the basis of the transmission image, and controls the multi-leaf collimator 20 so that the irradiation field of the therapeutic radiation 23 can be formed to have the calculated shape. The control apparatus 2 further irradiates the therapeutic radiation 23 to the patient by using the therapeutic radiation irradiating unit 16.

The control apparatus 2 periodically and repeatedly carries out the operation from the obtainment of the first transmission image and the second transmission image to the irradiation of the therapeutic radiation 23 until a dose of the therapeutic radiation 23 irradiated to the affected region of the patient 43 reaches a dose prescribed in the therapeutic plan.

According to such a radiation irradiating method, even when the transmission image where the affected region of the patient 43 is represented in the vicinity of (or overlapped by) an object (organ or marker) that does not move synchronously with the affected region, the position of the affected region can be detected more accurately. As the result, the radiotherapy system 1 can accurately adjust the affected region just on a predetermined position, and can irradiate the therapeutic radiation to the affected region more accurately. According to such a radiation irradiating method, since an amount of data to be supplied to the control apparatus 2 immediately before the radiotherapy is small, the user can produce the plurality of template images more easily and more rapidly.

It should be noted that the template producing section 55 may be replaced by another template producing section. The template producing section calculates a plurality of coincidence degrees of the plurality of first template images produced by the template producing section 55 on the basis of each of the plurality of first transmission images obtained by the first imaging control section 51. The template producing section calculates the first template image having the maximum coincidence degree from among the plurality of first template images. By using the calculated first template image and the first transmission image, the template producing section calculates first position data representing the affected region in the first transmission image. The template producing section displays the first transmission image and the first position data on the display unit. The template producing section produces another first template image representing a portion extracted from the first transmission image on the basis of data supplied through an operation of the input unit of the control apparatus 2. The template producing section carries out the same data process of all of the plurality of first transmission images obtained by the first imaging control section 51 to produce a plurality of other first template images. The template producing section carries out the same data process of the plurality of second transmission images obtained by the first imaging control section 51 to produce the other ones of the plurality of second template images.

In this case, the position calculating section 57 calculates a plurality of coincidence degrees of the other ones of the plurality of first template images on the basis of the first position calculation transmission image obtained by the second imaging control section 56. The position calculating section 57 calculates the other first template image having a maximum coincidence degree from among the other first template images. By using the calculated other first template image and the first position calculation transmission image, the position calculating section 57 calculates the first position data representing the affected region in the first transmission image. The position calculating section 57 calculates a plurality of coincidence degrees of a plurality of other second template images on the basis of the second position calculation transmission image obtained by the second imaging control section 56. The position calculating section 57 calculates the other second template image having a maximum coincidence degree from among the plurality of other second template images. By using the calculated other second template image and the second position calculation transmission image, the position calculating section 57 calculates the second position representing the affected region in the second position calculation transmission image. The position calculating section 57 calculates the position of the affected region of the patient 43 on the basis of the calculated first position data and second position data.

Since formed from the actually imaged transmission images, a plurality of other first template images and the plurality of other second template images described above are more suitable for the template matching. According to such a radiotherapy system, the user can designate a region representing the affected region from each of the plurality of first transmission images, while referring to the first position displayed on the display unit, and can designates the region more easily. Furthermore, according to such a radiotherapy system, in the same manner as that of the control apparatus 2 of the above-mentioned embodiment, even when a transmission image where the affected region of the patient 43 is represented in the vicinity of (or overlapped by) an object (organ or marker) that does not move synchronously with the affected region, the position data of the affected region can be detected more accurately. As the result, the radiotherapy system 1 can accurately adjust such that the affected region is just position on a predetermined position, and can irradiate the therapeutic radiation to the affected region more accurately.

Meanwhile, the plurality of separation results 71-1 to 71-n can be replaced by a plurality of other separation results. Each of the plurality of other separation results show the objective portion template, the background template, and another background template. The region designating section 52 further designates a background region on the basis of data supplied by an operation of the input unit of the control apparatus 2. The background region shows a region representing a portion other than the affected region of the patient 43 in the selected transmission image, and shows a shape and a position of the region. The portion is a portion moving in accordance with a motion of the patient 43 (for example, respiration), for example, the diaphragm is exemplified.

At this time, the separating section 53 calculates a plurality of replaced separation results on the basis of the two transmission images 61-1 and 61-2. Such calculation can be carried out by the least-square method in the same manner as that of the calculation in the above-mentioned embodiment. Moreover, the reconfiguring section 54 calculates a plurality of reconfiguration images on the basis of the plurality of replaced separation results. Furthermore, the template producing section 55 calculates the most optimum separation result from the plurality of replaced separation results on the basis of a plurality of reconfiguration images, and produces a plurality of template images from the most optimum separation result. Each of the plurality of template images is calculated by superimposing the objective portion template of the most optimum separation result on positions of a plurality of assumption regions in the background template of the most optimum separation template, and superimposing another background template of the most optimum separation result on positions of a plurality of assumption regions in the background template of the most optimum separation result.

According to such template image, the object moving simultaneously with the motion of the patient is represented on the transmission image, and even when the movement of the object is different from the motion of the patient, a position of the affected region can be detected more accurately. As the result, the radiotherapy system 1 can adjust such that the affected region is just positioned on a predetermined position more accurately, and can irradiate the therapeutic radiation to the affected region more accurately.

## Claims

1. A control apparatus (2) for a radiotherapy apparatus (3), comprising:
a storage unit configured to store a plurality of transmission images (61-1, 61-2) obtained by a first imaging control section (51) using radiation which has transmitted through a subject (43); and
a region designating section (52) configured to designate an objective portion region (64) on a first selection transmission image (61-1) among said plurality of transmission images based on data supplied from an input unit;
**characterized in that** the apparatus further comprises
a separating section (53) configured to calculate a plurality of separation results (71-1, ..., 71-n) based on said first selection transmission image, said objective portion region and
a second selection transmission image (61-2) of said plurality of transmission images;
a reconfiguring section (54) configured to calculate a plurality of reconfiguration images (75-1, ..., 75-n) based on said plurality of separation results;
a template producing section (55) configured to produce a plurality of template images (72,73) based on an optimum separation result (71-i) selected from the plurality of separation results based on said plurality of reconfiguration images;
a second imaging section (56) configured to image a position calculation transmission image by using the radiation which has transmitted through said subject; and
a position calculating section (57) configured to calculate position data of said objective portion region based on said plurality of template images and said position calculation transmission image;
a swing control section (58) configured to control a swing mechanism (15) to move a radiation irradiating unit (16) in relation to said subject based on said position data such that radiation transmits through said objective portion region; and
an irradiation control section (59) configured to control said radiation irradiating unit to irradiate the radiation,
wherein each of said plurality of separation results (71-i,i=1..n) indicates an objective portion template (72) and background template (73), and is calculated such that a first difference between said first selection transmission image (61-1) and an image produced by superimposing said objective portion template (72) in a position of said objective portion region (64) on said background template (73) becomes small and a second difference between said second selection transmission image (61-2) and an image produced by superimposing said objective portion template (72) in a position of an assumption region (66-i), which is different from said objective portion region (64), on said background template (73) becomes small.

2. The control apparatus for the radiotherapy apparatus according to claim 1, wherein said plurality of separation results (71-1, ..., 71-n) are respectively calculated such that an image produced by superimposing said objective portion template (72) on a plurality of assumption regions (66-1, ..., 66-n), which are different from each other, on said background template (73) is equal to said second selection transmission image (61-2).

3. The control apparatus for the radiotherapy apparatus according to claim 2, wherein said template producing section (55) selects a similar reconfiguration image which is the most similar to a comparison image of said plurality of transmission images (61-1, 61-2) from said plurality of reconfiguration images (75-1, ..., 75-n), and
said optimum separation result (71-i) is used to calculate said similar reconfiguration image.

4. The control apparatus for the radiotherapy apparatus according to claim 3, wherein said comparison image is said first selection transmission image (61-1).

5. The control apparatus for the radiotherapy apparatus according to claim 3, wherein said comparison image is said second selection transmission image (61-2).

6. The control apparatus for the radiotherapy apparatus according to any of claims 1 to 5, wherein said template producing section (55):
displays one transmission image of said plurality of transmission images (61-1, 61-2) and a part of said one transmission image for a candidacy region calculated based on said optimum separation result (71-i), and
designates the candidacy region on said one transmission image based on data supplied through an operation of the input unit, and
a template calculated based on said one transmission image shows an image of the part of said one transmission image for said candidacy region.

7. The control apparatus for the radiotherapy apparatus according to any of claims 1 to 5, wherein said template producing section(55) calculates said plurality of template images by superimposing the objective portion template (72) of said optimum separation result (71-i) on the background template (73) of said optimum separation result, and
a relative position of the objective portion template of said optimum separation result to the background portion template of said optimum separation result is different for every template image.

8. The control apparatus for the radiotherapy apparatus according to any of claims 1 to 7, wherein each of said plurality of separation results (71-1, ..., 71-n) includes another background template, and said separation result is calculated such that an image obtained by superimposing the objective portion template (72) and said another background template on said background template (73) is equal to either of said plurality of transmission images (61-1, 61-2).

9. A position determining method comprising:
obtaining a plurality of transmission images (61-1, 61-2) by using radiation transmitting through a subject (43); and
designating an objective portion region (64) of a first selection transmission image (61-1) among the plurality of transmission images based on data supplied through an operation of an input unit, **characterized in that** the method further comprises
calculating a plurality of separation results (71-1, ..., 71-n) based on said first selection transmission image, said objective portion region, and a second selection transmission image (61-2) of the plurality of transmission images;
calculating a plurality of reconfiguration images (75-1, ..., 75-n) based on the plurality of separation results;
producing a plurality of template images (72,73) from said plurality of reconfiguration images based on an optimum separation result of the plurality of separation results;
obtaining a position calculation transmission image by using radiation transmitting through said subject; and
calculating position data of the objective portion region based on said plurality of template images and said position calculation transmission image,
wherein each of said plurality of separation results (71-i,i=1...n) shows an objective portion template (72) and a background template (73), and
said each separation result (71-i) is determined such that a first difference becomes small between said first selection transmission image (61-1) and an image obtained by superimposing said objective portion template (72) in a position of said objective portion region (64) on said background template (73), and a second difference becomes small between said second selection transmission image (61-2) and an image obtained by superimposing said objective portion template (72) in a position of an assumption region (66-i) other than said objective portion region (64) on said background template (73).

10. The position determining method according to claim 9, wherein said plurality of separation results (71-1, ..., 71-n) are calculated such that an image produced by superimposing said objective portion template (72) on each of a plurality of assumption regions (61-1, ..., 61-n) which are different from each other in said background template (73) is equal to said second selection transmission image (61-2).

11. The position determining method according to claim 10, further comprising:
selecting a similar reconfiguration image which is the most similar to a comparison image of said plurality of transmission images from among said plurality of reconfiguration images (75-1, ..., 75-n),
wherein said optimum separation result (71-i) is selected from said plurality of separation results (71-1, ..., 71-n) for using to calculate said similarity reconfiguration image.

12. The position determining method according to claim 11, wherein said comparison image is said first selection transmission image (61-1).

13. The position determining method according to claim 11, wherein said comparison image is said second selection transmission image.

14. The position determining method according to any of claims 9 to 13, further comprising:
displaying one of said plurality of transmission images (61-1, 61-2) and a candidacy region calculated based on said optimum separation result (71-i) of said one transmission image; and
designating the candidacy region of said one transmission image based on data supplied through an operation of the input unit,
wherein a template calculated based on said one transmission image shows an image of a portion of said one transmission image for said candidacy region.

15. The position determining method according to any of claims 9 to 13, wherein said plurality of template images are calculated by superimposing the objective portion template (72) of said optimum separation result on said background template (73) of said optimum separation result, and
a relative position of said objective portion template of said optimum separation result to said background template of said optimum separation result is different for every template image.

16. The position determining method according to any of claims 9 to 15, wherein each of said plurality of separation results (71-1, ..., 71-n) shows another background template, and
said separation result is calculated such that an image obtained by superimposing said objective portion template (72) and said another non-objective portion template on said background template (73) is equal to either of said plurality of transmission images (61-1, 61-2).

## Patentansprüche

1. Steuervorrichtung (2) für eine Radiotherapie-Vorrichtung (3) mit:
einer Speichereinheit, die so gestaltet ist, dass mehrere Transmissionsbilder (61-1, 61-2) gespeichert werden, die durch einen ersten Abbildungssteuerblock (51) erhalten worden sind, der Strahlung verwendet, die durch ein Objekt (43) transmittiert worden ist; und
einem Bereichskennzeichnungsblock (52), der so gestaltet ist, dass ein Zielabschnittsbereich (64) in einem ersten Auswahltransmissionsbild (61-1) unter den mehreren Transmissionsbildern basierend auf den Daten gekennzeichnet wird, die von einer Eingabeeinheit zugeführt worden sind;
**dadurch gekennzeichnet, dass** die Vorrichtung ferner aufweist:
einen Trennungsblock (53), der so gestaltet ist, dass mehrere Trennungsergebnisse (71-1, ..., 71-n) basierend auf dem ersten Auswahltransmissionsbild, dem Zielabschnittsbereich und einem zweiten Auswahltransmissionsbild (61-2) der mehreren Transmissionsbilder berechnet werden;
einen Rekonfigurationsblock (54), der so gestaltet ist, dass mehrere Rekonfigurationsbilder (75-1, ..., 75-n) basierend auf den mehreren Trennungsergebnissen berechnet werden;
einen Vorlageerzeugungsblock (55), der so gestaltet ist, dass mehrere Vorlagebilder (72, 73) basierend auf einem optimalen Trennungsergebnis (71-i) erzeugt werden, das aus den mehreren Trennungsergebnissen basierend auf den mehreren Rekonfigurationsbildern ausgewählt ist;
einen zweiten Abbildungsblock (56), der so gestaltet ist, dass ein Positionsberechnungstransmissionsbild unter Verwendung der Strahlung abgebildet wird, die durch das Objekt hindurchgetreten ist; und
einen Positionsberechnungsblock (57), der so gestaltet ist, dass Positionsdaten des Zielabschnittsbereichs basierend auf den mehreren Vorlagebildern und dem Positionsberechnungstransmissionsbild berechnet werden;
einen Drehsteuerblock (58), der so gestaltet ist, dass ein Drehmechanismus (15) gesteuert wird, eine Strahlungsabstrahleinheit (16) in Bezug auf das Objekt basierend auf den Positionsdaten zu steuern, sodass Strahlung durch den Zielabschnittsbereich transmittiert wird; und
einen Abstrahlsteuerblock (59), der so gestaltet ist, dass die Strahlungsabstrahleinheit so gesteuert wird, dass sie die Strahlung abstrahlt,
wobei jedes der mehreren Trennungsergebnisse (71-i, i=1....n) eine Zielabschnittsvorlage (72) und eine Hintergrundvorlage (73) angibt und so berechnet wird, dass ein erster Unterschied zwischen dem ersten Auswahltransmissionsbild (61-1) und einem Bild, das durch Überlagern der Zielabschnittsvorlage (72) in einer Position des Zielabschnittsbereichs (64) auf der Hintergrundvorlage (73) erzeugt ist, klein wird, und ein zweiter Unterschied zwischen dem zweiten Auswahltransmissionsbild (61-2) und einem Bild, das durch Überlagern der Zielabschnittsvorlage (72) in einer Position eines Annahmebereichs (66-i), der unterschiedlich zu dem Zielabschnittsbereich (64) ist, auf der Hintergrundvorlage (73) erzeugt ist, klein wird.

2. Steuervorrichtung für eine Radiotherapie-Vorrichtung nach Anspruch 1, bei der die mehreren Trennungsergebnisse (71-1, ..., 71-n) jeweils derart berechnet sind, dass ein Bild, das durch Überlagern der Zielabschnittsvorlage (72) auf mehreren Annahmebereichen (66-1, ..., 66-n), die zueinander unterschiedlich sind, auf der Hintergrundvorlage (73) erzeugt ist, gleich dem zweiten Auswahltransmissionsbild (61-2) ist.

3. Steuervorrichtung für eine Radiotherapie-Vorrichtung nach Anspruch 2, bei der der Vorlageerzeugungsblock (55) ein ähnliches Rekonfigurationsbild auswählt, das von den mehreren Rekonfigurationsbildern (75-1, ..., 75-n) einem Vergleichsbild der mehreren Transmissionsbilder (61-1, 61-2) am ähnlichsten ist, und
das optimale Trennungsergebnis (71-i) verwendet wird, um das ähnliche Rekonfigurationsbild zu berechnen.

4. Steuervorrichtung für eine Radiotherapie-Vorrichtung nach Anspruch 3, bei der das Vergleichsbild das erste Auswahltransmissionsbild (61-1) ist.

5. Steuervorrichtung für eine Radiotherapie-Vorrichtung nach Anspruch 3, bei der das Vergleichsbild das zweite Auswahltransmissionsbild (61-2) ist.

6. Steuervorrichtung für eine Radiotherapie-Vorrichtung nach einem der Ansprüche 1 bis 5, bei der der Vorlageerzeugungsblock (55):
ein Transmissionsbild der mehreren Transmissionsbilder (61-1, 61-2) und einen Teil des einen Transmissionsbildes für einen Prüfbereich anzeigt, der basierend auf dem optimalen Trennungsergebnis (71-i) berechnet worden ist, und
den Prüfbereich in dem einen Transmissionsbild basierend auf Daten kennzeichnet, die durch eine Betätigung der Eingabeeinheit zugeführt worden sind, und
eine Vorlage, die basierend auf dem einen Transmissionsbild berechnet worden ist, ein Bild des Teils des einen Transmissionsbildes für den Prüfbereich zeigt.

7. Steuervorrichtung für eine Radiotherapie-Vorrichtung nach einem der Ansprüche 1 bis 5, bei der der Vorlageerzeugungsblock (55) die mehreren Vorlagebilder durch Überlagern der Zielabschnittsvorlage (72) des optimalen Trennungsergebnisses (71-i) auf der Hintergrundvorlage (73) des optimalen Trennungsergebnisses berechnet und
eine Relativposition der Zielabschnittsvorlage des optimalen Trennungsergebnisses zu der Hintergrundabschnittsvorlage des optimalen Trennungsergebnisses für jedes Vorlagebild unterschiedlich ist.

8. Steuervorrichtung für eine Radiotherapie-Vorrichtung nach einem der Ansprüche 1 bis 7, bei der jedes der mehreren Trennungsergebnisse (71-1, ..., 71-n) eine weitere Hintergrundvorlage aufweist und das Trennungsergebnis derart berechnet wird, dass ein Bild, das durch Überlagern der Zielabschnittsvorlage (72) und der weiteren Hintergrundvorlage auf der Hintergrundvorlage (73) erhalten wird, gleich einem der mehreren Transmissionsbilder (61-1, 61-2) ist.

9. Positionsbestimmungsverfahren umfassend:
Erhalten mehrerer Transmissionsbilder (61-1, 61-2) durch Verwenden von Strahlung, die durch ein Objekt (43) transmittiert wird; und
Kennzeichnen eines Zielabschnittsbereichs (64) eines ersten Auswahltransmissionsbildes (61-1) der mehreren Transmissionsbilder basierend auf Daten, die durch eine Betätigung einer Eingabeeinheit zugeführt worden sind, **dadurch gekennzeichnet, dass** das Verfahren ferner umfasst:
Berechnen mehrerer Trennungsergebnisse (71-1, ..., 71-n) basierend auf dem ersten Auswahltransmissionsbild, dem Zielabschnittsbereich und einem zweiten Auswahltransmissionsbild (61-2) der mehreren Transmissionsbilder;
Berechnen mehrerer Rekonfigurationsbilder (75-1, ..., 75-n) basierend auf den mehreren Trennungsergebnissen;
Erzeugen mehrerer Vorlagebilder (72, 73) aus den mehreren Rekonfigurationsbildern basierend auf einem optimalen Trennungsergebnis der mehreren Trennungsergebnisse;
Erhalten eines Positionsberechnungstransmissionsbildes unter Verwendung von Strahlung, die durch das Objekt transmittiert wird; und
Berechnen von Positionsdaten des Zielabschnittsbereichs basierend auf den mehreren Vorlagebildern und dem Positionsberechnungstransmissionsbild,
wobei jedes der mehreren Trennungsergebnisse (71-i, i=1...n) eine Zielabschnittsvorlage (72) und eine Hintergrundvorlage (73) zeigt und
jedes Trennungsergebnis (71-i) so bestimmt wird, dass ein erster Unterschied zwischen dem ersten Auswahltransmissionsbild (61-1) und einem Bild, das durch Überlagern der Zielabschnittsvorlage (72) in einer Position des Zielabschnittsbereichs (64) auf der Hintergrundvorlage (73) erhalten wird, klein wird und ein zweiter Unterschied zwischen dem zweiten Auswahltransmissionsbild (61-2) und einem Bild, das durch Überlagern der Zielabschnittsvorlage (72) in einer Position eines Annahmebereichs (66-i), der anders als der Zielabschnittsbereich (64) ist, auf der Hintergrundvorlage (73) erhalten wird, klein wird.

10. Positionsbestimmungsverfahren nach Anspruch 9, bei dem die mehreren Trennungsergebnisse (71-1, ..., 71-n) derart berechnet werden, dass ein Bild, das durch Überlagern der Zielabschnittsvorlage (72) auf jeden mehrerer Annahmebereiche (61-1, ..., 61-n), die unterschiedlich zueinander sind, in der Hintergrundvorlage (73) erzeugt ist, gleich dem zweiten Auswahltransmissionsbild (61-2) ist.

11. Positionsbestimmungsverfahren nach Anspruch 10, ferner umfassend:
Auswählen eines ähnlichen Rekonfigurationsbildes, das von den mehreren Rekonfigurationsbildern (75-1, ..., 75-n) einem Vergleichsbild der mehreren Transmissionsbilder das ähnlichste ist,
wobei das optimale Trennungsergebnis (71-i) aus den mehreren Trennungsergebnissen (71-1, ..., 71-n) zur Verwendung zum Berechnen des ähnlichen Rekonfigurationsbildes ausgewählt ist.

12. Positionsbestimmungsverfahren nach Anspruch 11, bei dem das Vergleichsbild das erste Auswahltransmissionsbild (61-1) ist.

13. Positionsbestimmungsverfahren nach Anspruch 11, bei dem das Vergleichsbild das zweite Auswahltransmissionsbild ist.

14. Positionsbestimmungsverfahren nach einem der Ansprüche 9 bis 13, ferner umfassend:
Anzeigen eines der mehreren Transmissionsbilder (61-1, 61-2) und eines Prüfbereichs, der basierend auf dem optimalen Trennungsergebnis (71-i) des einen Transmissionsbildes berechnet worden ist; und
Kennzeichnen des Prüfbereichs des einen Transmissionsbildes basierend auf Daten, die durch eine Betätigung der Eingabeeinheit zugeführt worden sind,
wobei eine Vorlage, die basierend auf dem einen Transmissionsbild berechnet worden ist, ein Bild eines Abschnitts des Transmissionsbildes für den Prüfbereich zeigt.

15. Positionsbestimmungsverfahren nach einem der Ansprüche 9 bis 13, bei dem die mehreren Vorlagebilder durch Überlagern der Zielabschnittsvorlage (72) des optimalen Trennungsergebnisses auf der Hintergrundvorlage (73) des optimalen Trennungsergebnisses berechnet werden und
eine Relativposition der Zielabschnittsvorlage des optimalen Trennungsergebnisses zu der Hintergrundvorlage des optimalen Trennungsergebnisses für jedes Vorlagebild unterschiedlich ist.

16. Positionsbestimmungsverfahren nach einem der Ansprüche 9 bis 15, bei dem jedes der mehreren Trennungsergebnisse (71-i, ..., 71-n) eine weitere Hintergrundvorlage zeigt und
das Trennungsergebnis derart berechnet wird, dass ein Bild, das durch Überlagern der Zielabschnittsvorlage (72) und der weiteren Nicht-Zielabschnittsvorlage auf der Hintergrundvorlage (73) gleich einem der mehreren Transmissionsbilder (61-1, 61-2) ist.

## Revendications

1. Appareil de contrôle (2) pour un appareil de radiothérapie (3), comprenant :
une unité de stockage configurée pour stocker une série d'images de transmission (61,1-61,2) obtenue par une première section de contrôle de l'imagerie (51) utilisant un rayonnement qui a été transmis au travers d'un sujet (43) ; et
une section de désignation de région (52) configurée pour désigner une région de partie d'objectif (64) sur une première sélection d'image de transmission (61-1) parmi ladite série d'images de transmission sur base des données obtenues d'une unité d'entrée ;
**caractérisé en ce que** l'appareil comprend en outre,
une section de séparation (53) configurée pour calculer une série de résultats de séparation (71-1, ...71-n) sur base de ladite première sélection d'image de transmission, ladite région de partie d'objectif, et
une deuxième sélection d'image de transmission (61-2) de ladite série d'images de transmission ;
une section de reconfiguration (54) configurée pour calculer une série d'images de reconfiguration (75-1, ...75-n) sur base de ladite série de résultats de séparation ;
une section produisant une matrice (55) configurée pour produire une série d'images de matrice (72, 73) sur base d'un résultat optimal de séparation (71-i) choisi parmi la série de résultats de séparation sur base de ladite série d'images de reconfiguration ;
une deuxième section d'imagerie (56) configurée pour créer l'image d'une image de transmission de calcul de position en utilisant le rayonnement qui a été transmis au-travers dudit sujet ; et
une section de calcul de position (57) configurée pour calculer les données de position de ladite région de partie d'objectif sur base de ladite série d'images de matrice et de ladite image de transmission de calcul de position ;
une section de contrôle du mécanisme d'oscillation (15) pour déplacer l'unité de rayonnement (16) en relation audit sujet sur base desdites données de position de sorte que le rayonnement est transmis au-travers de ladite région de partie d'objectif, et
une section de contrôle de rayonnement (59) configurée pour contrôler ladite unité de rayonnement et émettre le rayonnement,
où chacun desdits résultats de séparation (71-i, i = 1, ...n) indique une matrice de partie d'objectif (72) et une matrice d'arrière-plan (73), et est calculé de sorte qu'une première différence entre ladite première sélection d'image de transmission (61) et une image produite par superposition de ladite matrice de partie d'objectif (72) en une position de ladite région de partie d'objectif (64) sur ladite matrice d'arrière-plan (73) devient faible et une deuxième différence entre ladite deuxième sélection d'image de transmission (61-2) et une image produite par superposition de ladite matrice de partie d'objectif (72) en une position d'une région d'évaluation (66-i), qui est différente de ladite région de partie d'objectif (64), sur ladite matrice d'arrière-plan, devient faible.

2. Appareil de contrôle de l'appareil de radiothérapie selon la revendication 1, où ladite série de résultats de séparation (71-1, ...71-n) est calculée respectivement, de sorte qu'une image produite par superposition de ladite matrice de partie d'objectif (72) sur une série de régions d'évaluation (66-1, ...66-n), qui sont différentes les unes des autres, sur ladite matrice d'arrière-plan (73) est égale à ladite deuxième sélection d'image de transmission (61-2).

3. Appareil de contrôle de l'appareil de radiothérapie selon la revendication 2, où ladite section de production de matrice (55) sélectionne une image de reconfiguration similaire, qui est la plus similaire à une image de comparaison de ladite série d'images de transmission (61-1, 61-2) depuis ladite série d'images de reconfiguration (75-1, ...75-n) et
ledit résultat optimal de séparation (71-i) est utilisé pour calculer ladite image similaire de reconfiguration.

4. Appareil de contrôle de l'appareil de radiothérapie selon la revendication 3, où ladite image de comparaison est ladite première sélection d'image de transmission (61-1).

5. Appareil de contrôle de l'appareil de radiothérapie selon la revendication 3, où ladite image de comparaison est ladite deuxième sélection d'image de transmission (61-2).

6. Appareil de contrôle de l'appareil de radiothérapie selon l'une quelconque des revendications 1 à 5, où ladite section produisant une matrice (55) :
affiche une image de transmission de ladite série d'images de transmission (61-1, 61-2) et une partie de ladite image de transmission pour une région candidate calculée sur base du résultat optimal de séparation (71-i), et
désigne la région candidate sur ladite une image de transmission sur base des données fournies par une opération de l'unité d'entrée, et
une matrice calculée sur ladite une image de transmission montre une image de la partie de ladite une image de transmission pour ladite région candidate.

7. Appareil de contrôle de l'appareil de radiothérapie selon l'une quelconque des revendications 1 à 5, où ladite section produisant une matrice (55)-calcule ladite série d'images de matrice par superposition de la matrice de partie d'objectif (72) dudit résultat optimal de séparation (71-i) sur la matrice d'arrière-plan (73) dudit résultat optimal de séparation, et
une position relative de la matrice de partie d'objectif dudit résultat optimal de séparation à la matrice de partie d'arrière-plan dudit résultat optimal de séparation est différente pour chaque image de matrice.

8. Appareil de contrôle de l'appareil de radiothérapie selon l'une quelconque des revendications 1 à 7, où chacun de ladite série de résultats de séparation (71-1, ...71-n) comprend une autre matrice d'arrière-plan, et ledit résultat de séparation est calculé de sorte qu'une image obtenue par superposition de la matrice de partie d'objectif (72) et de ladite autre matrice d'arrière-plan sur la matrice d'arrière-plan (73) est égale à l'une de la série des images de transmission (61-1, 61-2).

9. Procédé de détermination de position, comprenant :
l'obtention d'une série d'images de transmission (61-1, 61-2) en utilisant la transmission de rayonnement au-travers d'un sujet (43) ;
la désignation d'une région de partie d'objectif (64) d'une première sélection d'image de transmission (61-1) parmi la série d'images de transmission sur base des données fournies par une opération d'une unité d'entrée, **caractérisée en ce que** le procédé comprend en outre
le calcul d'une série de résultats de séparation (71-1, ...71-n) sur base de la première sélection d'image de transmission, et ladite région de partie d'objectif, et d'une deuxième sélection d'image de transmission (61-2- parmi la série d'images de transmission ;
le calcul d'une série d'images de reconfiguration (75-1, ...75-n) sur base de la série de résultats de séparation ;
la production d'une série d'images de matrice (72, 73) à partir de ladite série d'images de reconfiguration, sur base d'un résultat optimal de séparation de la série des résultats de séparation ;
l'obtention d'une image de transmission de calcul de position en utilisant la transmission du rayonnement au-travers dudit sujet, et
le calcul de données de position de la région de partie d'objectif sur base de ladite série d'images de matrice et de ladite image de transmission de calcul de position,
où chacun de ladite série de résultats de séparation (71-i, i=1,...n) montre une matrice de partie d'objectif (72) et une matrice d'arrière-plan (73), et
chaque résultat de séparation (71-i) est déterminé de sorte qu'une première différence devient faible entre ladite première sélection d'image de transmission (61-1) et une image obtenue par superposition de ladite matrice de partie d'objectif (72) en une position de ladite région de partie d'objectif (64) sur ladite matrice d'arrière-plan (73), et une deuxième différence devient faible entre ladite deuxième sélection d'image de transmission (61-2) et une image produite par superposition de ladite matrice de partie d'objectif (72) en une position d'une région d'évaluation (66-i), qui est différente de ladite région de partie d'objectif (64), sur ladite matrice d'arrière-plan (73).

10. Procédé de détermination de position selon la revendication 9, où ladite série de résultats de séparation (71-1, ...71-n) est calculée de sorte qu'une image produite par superposition de ladite matrice de partie d'objectif (72) sur chacune de ladite série des régions d'évaluation (61-1, ...61-n) qui sont différentes les unes des autres dans ladite matrice d'arrière-plan (73) est égale à ladite deuxième sélection d'image de transmission (61-2).

11. Procédé de détermination de position selon la revendication 10, comprenant en outre :
la sélection d'une image de reconfiguration similaire, qui est la plus similaire à une image de comparaison de ladite série d'images de transmission parmi ladite série des images de reconfiguration (75-1, ...75-n),
où ledit résultat optimal de séparation (71-i) est choisi parmi la série de résultats de séparation (71-1, ...71-n) à utiliser pour calculer ladite image de reconfiguration similaire.

12. Procédé de détermination de position selon la revendication 11, où ladite image de comparaison est ladite première sélection d'image de transmission (61-1).

13. Procédé de détermination de position selon la revendication 11, où ladite image de comparaison est ladite deuxième sélection d'image de transmission.

14. Procédé de détermination de position selon l'une quelconque des revendications 9 à 13, comprenant en outre :
l'affichage d'une de ladite série d'images de transmission (61-1, 61-2) et d'une région candidate calculée sur base dudit résultat optimal de séparation (71,i) de ladite une image de transmission, et
la désignation de la région candidate de ladite image de transmission sur base des données fournies par une opération de l'unité d'entrée,
où une matrice calculée sur base de ladite image de transmission montre une image d'une partie de ladite image de transmission pour ladite région candidate.

15. Procédé de détermination de position selon l'une quelconque des revendications 9 à 13, où ladite série d'images de matrice est calculée par superposition de la matrice de partie d'objectif (72) dudit résultat optimal de séparation sur la matrice d'arrière-plan (73) dudit résultat optimal de séparation, et
la position relative de la matrice de partie d'objectif dudit résultat optimal de séparation à la matrice de partie d'arrière-plan dudit résultat optimal de séparation est différente pour chaque image de matrice.

16. Procédé de détermination de position selon l'une quelconque des revendications 9 à 15, où chacun de ladite série de résultats de séparation (71-1, ...71-n) montre une autre matrice d'arrière-plan, et
ledit résultat de séparation est calculé de sorte qu'une image obtenue par superposition de la matrice de partie d'objectif (72) et de ladite autre matrice non partie d'objectif sur la matrice d'arrière-plan (73) est égale à l'une de la série des images de transmission (61-1, 61-2).
